# EUROPÄISCHE PATENTSCHRIFT

(11) **EP 2 998 629 B1**
(45) Veröffentlichungstag und Bekanntmachung des Hinweises auf die Patenterteilung: **03.04.2019**
(21) Anmeldenummer: 15182835.7
(22) Anmeldetag: 28.08.2015
(51) Int. Cl.: F16K 31/60, F16K 21/10

(54) **SCHLIESSANTRIEB FÜR VENTILE**
CLOSING DRIVE FOR VALVES
SERVOMOTEUR DE FERMETURE POUR SOUPAPES

(30) Priorität: 17.09.2014 DE 102014113417
(43) Veröffentlichungstag der Anmeldung: 23.03.2016
(73) Patentinhaber: Franke Aquarotter GmbH, 14974 Ludwigsfelde (DE)
(72) Erfinder:
(74) Vertreter: Lemcke, Brommer & Partner Patentanwälte Partnerschaft mbB

(56) Entgegenhaltungen:
- DE-A1- 2 821 808
- DE-A1- 2 908 882
- DE-A1- 2 926 374
- DE-A1- 3 005 280

## Beschreibung

Die vorliegende Erfindung betrifft einen Schließantrieb für Ventile, insbesondere für eine Selbstschlussarmatur.

Bekannte Selbstschlussarmaturen verfügen meist über eine wassergefüllte Gegendruckkammer, welche beim Öffnen des Ventils entleert wird und sich dann langsam füllt und dabei das Ventil wieder schließt. Eine solche Gegendrucckammer kann wegen des enthaltenen Stagnationswassers eine Keimbildung begünstigen und zu hygienischen Problemen führen. Außerdem ist die Schließhysterese bekannter Selbstschlussarmaturen derart, dass ein zunächst maximaler Wasserfluss über die Öffnungsphase langsam abnimmt, bis die Armatur schließlich den Wasserfluss wieder vollständig absperrt.

Aus der DE 29 08 882 A1 ist darüber hinaus ein Schließantrieb mit einem Fluiddämpfer und einer Rückstellfeder bekannt. Eine von einer Betätigungstaste in Bewegung versetzte Kolbenstange führt bei einer Schließbewegung einen Leerhub durch. Eine Bewegungsgeschwindigkeit der Kolbenstange nimmt dabei während der Schließbewegung ab. Dadurch tritt ein langes Nachlaufen der Armatur auf. Ein ähnlicher Schließantrieb gemäß dem Oberbegriff von Ansrpuch 1 ist auch aus DE 30 05 280 A1 bekannt.

Aufgabe der Erfindung ist es, einen Schließantrieb für Ventile anzugeben, welcher die genannten Probleme vermeidet und erreicht, dass über die Öffnungsphase ein möglichst gleichbleibender Wasserstrahl aus der Armatur austritt. Die Erfindung erreicht dies durch einen Schließantrieb, bei dem ein Dämpfer mit einem beweglichen Dämpferorgan ausgestattet ist, das von einer Ausgangslage in eine Endlage auslenkbar und mit einem Stellelement zum Öffnen und Schließen des Ventils verbunden ist. Wird das Dämpferorgan in die Endlage ausgelenkt, so bewegt es sich durch eine von einem Kraftspeicher ausgeübte Rückstellkraft gegen den Widerstand des Dämpfers selbsttätig zurück in seine Ausgangslage. Dabei führt das Stellelement zunächst einen Leerhub aus, bevor ein am Stellelement vorgesehenes Mitnehmerorgan eine Schließbewegung des Ventils bewirkt. Durch den Leerhub wird eine Phase gleichbleibenden Wasserflusses realisiert. Der Dämpfer dient dabei als Bremse zum Verlangsamen der Rückstellbewegung des Stellelements und ist so ausgebildet, dass seine Dämpfungskraft im Anschluss an den Leerhub zumindest vermindert ist, derart dass die Rückbewegung des Dämpferorgans während des Schließvorgangs des Schließantriebs gegenüber dem Leerhub beschleunigt erfolgt.
Hierdurch wird erreicht, dass der Schließvorgang nach der Phase gleichbleibenden Wasserflusses beschleunigt erfolgt, so dass kein langes Nachlaufen der Armatur auftritt.

Bei einer bevorzugten Ausführungsform umfasst der Dämpfer einen Hydraulickolben, der in einem mit einem Hydraulikmittel gefüllten Hydraulikzylinder läuft und bei einer Rückbewegung zurück in die Ausgangslage Hydraulikmittel verdrängt, welches hierbei durch eine Engstelle hindurchfließen muss. Die Engstelle wirkt somit als Dämpfungsventil. Die Verwendung eines geschlossenen hydraulischen Dämpfers ermöglicht einen kostengünstigen, langlebigen und zuverlässigen Aufbau des Schließantriebs und ist insbesondere für die Verwendung in Selbstschlussarmaturen geeignet. Durch Vermeidung von Stagnationswasser erfüllt eine solche Armatur gegenüber herkömmlichen Selbstschlussarmaturen mit Gegendruckkammer höhere Hygienestandards.

Die genannte Verringerung der Dämpfungskraft im Anschluss an den Leerhub kann bei einem derartigen hydraulischen Dämpfer dadurch verringert werden, dass der Hydraulikzylinder in einem Bereich vor der Ausgangslage einen erweiterten Durchmesser aufweist, so dass seine Dämpfungskraft in diesem Bereich vermindert ist. Alternativ kann aber auch einfach eine Nut bzw. Ausnehmung oder eine andere Art einer Bypassleitung in diesem Bereich des Hydraulikzylinders vorgesehen werden, über die die Kolbendichtung umströmt werden kann. Bei einer besonders bevorzugten Ausführungsform verläuft die Engstelle, durch die das Hydraulikmittel fließen muss, durch das Stellelement. Insbesondere kann die Engstelle durch eine axiale Bohrung des Stellelements gebildet werden, in die eine Stellschraube eingesetzt ist, mittels der der Querschnitt der Engstelle reguliert werden kann. Somit lässt sich auf einfache Weise eine von außen zugängliche Regulierung der Dämpfungskraft des Dämpfers und damit der Öffnungszeit einer mit dem Dämpfer ausgerüsteten Selbstschlussarmatur erreichen.

Außerdem kann in dem Kolben mindestens ein Einwegventil vorgesehen werden, durch welches Hydraulikflüssigkeit bei einer Bewegung des Kolbens in Öffnungsrichtung fließen kann. Alternativ kann auch mindestens eine Kolbendichtung vorgesehen werden, die schwimmend gelagert ist, so dass sie bei einer Bewegung des Kolbens in Schließlichtung dichtend gegen eine Dichtfläche am Kolbenrand anliegt und bei einer Bewegung des Kolbens in Öffnungsrichtung von Hydraulikflüssigkeit umströmt werden kann. Damit wird erreicht, dass bei einer Bewegung des Kolbens in einer Betätigungsrichtung zum Öffnen einer damit ausgestatteten Sanitärarmatur die Betätigung nicht gegen den Widerstand des Dämpfers erfolgen muss.

Vorzugsweise kann das Stellelement als Kolbenstange ausgebildet sein, die mit dem Kolben axial starr verbunden ist. Hierdurch wird ein besonders einfacher Aufbau erreicht. Der Leerhub wird hierbei dann vorzugsweise durch ein Spiel bei der Kopplung zwischen Stellelement bzw. dessen Mitnehmerorgan und dem von dem Schließantrieb betätigten Ventil realisiert. Alternativ kann jedoch auch in der Lagerung des Stellelements am Kolben durch entsprechendes Spiel bei der axialen Lagerung ein Leerhub realisiert werden.

Zusätzlich ist es möglich, die Kolbenstange drehbar mit dem Kolben zu verbinden, so dass Drehbewegungen der Kolbenstange auf eine weitere Baugruppe wie z.B. eine Mischerbaugruppe übertragen werden können, um so z.B. gleichzeitig die Temperatur des Wasserflusses einstellen zu können. Hierzu kann beispielsweise das Mitnehmerorgan als profilierter Zapfen ausgebildet werden, welcher eine drehinvariante Steckverbindung mit der weiteren Baugruppe, z.B der Mischerbaugruppe, ermöglicht.

Die Erfindung betrifft außerdem eine selbstschließende Sanitärarmatur mit einem Ventil mit einem beweglichen Ventilelement und einem erfindungsgemäßen Schließantrieb, wobei das Stellelement an das bewegliche Ventilelement angreift, um das Ventil zu öffnen oder zu schließen.

Weitere vorteilhafte Weiterbildungen und Vorteile der Erfindung werden anhand der Ausführungsbeispiele und der beigefügten Zeichnungen beschrieben. Hierbei zeigt:
- Figur 1: einen Längsschnitt entlang der Mittelachse einer Selbstschlussarmatur,
- Figur 2a: einen Längsschnitt durch den in der Selbstschlussarmatur aus Figur 1 eingesetzten Schließantrieb in einer Ausgangsstellung,
- Figur 2b: den Schnitt aus Figur 2a in einer isometrischen Ansicht,
- Figur 2c: einen Längsschnitt durch den in der Selbstschlussarmatur aus Figur 1 eingesetzten Schließantrieb in einer maximal ausgelenkten Stellung;
- Figur 2d: den Schnitt aus Figur 2c in einer isometrischen Ansicht,
- Figur 2e: in einer vergrößerte Detailansicht eines Ausschnitt aus Fig. 2d eine schwimmend gelagerte Kolbendichtung des Schließantriebs,
- Figur 3a: eine isometrische Ansicht des in dem Schließantrieb verwendeten Stellelements,
- Figur 3b: einen Längsschnitt durch das Stellelement aus Fig. 3a, und
- Figur 4: einen Längsschnitt einer Selbstschlussarmatur in einem Ausführungsbeispiel mit eingesetztem Mischer.

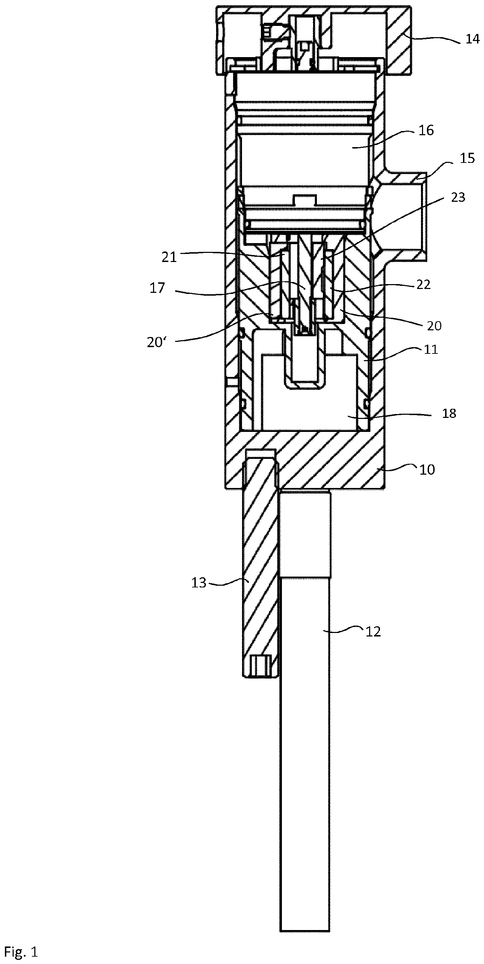

Die in Figur 1 gezeigte Selbstschlussarmatur besitzt ein Armaturengehäuse 10 in welches eine Ventilkartusche 11 eingesetzt ist. Am unteren Ende des Ventilgehäuses 10 ist eine Wasserzuleitung 12 angeschlossen. Ein Montagebolzen 13 dient zur Befestigung der Selbstschlussarmatur an einem Waschtisch.

Am oberen Ende der Sanitärarmatur befindet sich ein als Bedienknopf bzw. Taste ausgebildetes Bedienelement 14. Durch Herunterdrücken des Bedienknopfs 14 wird ein Wasserfluss zu einem Auslauf 15 des Armaturengehäuses 10 freigegeben. Ein mit der Ventilkartusche 11 verbundener Schließantrieb 16 sorgt dafür, dass der Wasserfluss nach einer vorgegebenen Zeitspanne wieder abgestellt wird und die Selbstschlussarmatur schließt. Der Schließantrieb 16, der im Folgenden näher erläutert wird, ist in Figur 1 zum besseren Überblick ungeschnitten gezeigt.

Die Sanitärarmatur besitzt eine Ventilanordnung mit keramischen Ventilscheiben. Diese Ventilanordnung umfasst zwei statische Ventilscheiben 21, 22, nämlich eine zulaufseitige Scheibe 21 und eine auslaufseitige Ventilscheibe 22, sowie eine zwischen den beiden statischen Ventilscheiben 21, 22 angeordnete bewegliche Ventilscheiben 23. Die drei keramischen Ventilscheiben 21, 23, 22 sind in einem Ventilpatronengehäuse 20 angeordnet, welches mit einem Gehäusedeckel 20' verschlossen ist.

Im Ausführungsbeispiel ist die Ventilanordnung somit, ohne dass die Erfindung hierauf beschränkt wäre, als Schieberventil mit drei Ventilscheiben realisiert, welches als Schließventil für eine Sanitärarmatur dient. Genauso wäre es möglich, den Schließantrieb für andere Arten von Ventilen auszubilden, indem dieser anstelle einer Linearbewegung beispielsweise eine Schenk- oder Drehbewegung ausführt, um ein entsprechendes bewegliches Schließelement des Ventils bei seiner Rückbewegung mitzunehmen und zurück in eine Schließstellung zu führen.

Die Betätigung der Ventilanordnung erfolgt im Ausführungsbeispiel durch ein als Kolbenstange ausgeführtes Stellelement 17, das sich von dem Bedienknopf 14 durch den Schließantrieb 16 hindurch erstreckt und mit einer Schulter an der beweglichen Ventilscheibe 23 angreift. Durch Herunterdrücken des Bedienknopfes 14 wird die bewegliche Ventilscheibe 23 über die Kolbenstange 17 nach unten in eine Öffnungsstellung bewegt und gibt so einen Wasserfluss frei. Der Schließantrieb 16 sorgt dafür, dass die Kolbenstange 17 und mit ihr die bewegliche Ventilscheibe 23 nach Ablauf der vorgegebenen Öffnungszeit wieder nach oben in eine Schließstellung bewegt wird.

Unterhalb der Ventilanordnung befindet sich ein freier Bauraum 18, in den je nach Modell der Selbstschlussarmatur ein separater Mischer eingesetzt werden kann, mit dem über entsprechende Zuleitungen 12 separat zugeführtes Kalt- und Warmwasser in einem einstellbaren Mischungsverhältnis verschnitten werden kann und dann als Mischwasser über die beschriebene Ventilanordnung zum Auslauf 15 gelangt. In der in Figur 1 gezeigten Bauform ist ein solcher Mischer nicht eingebaut und stattdessen durch ein Leerelement ersetzt, so dass der Bauraum 18 im Wesentlichen frei bleibt.

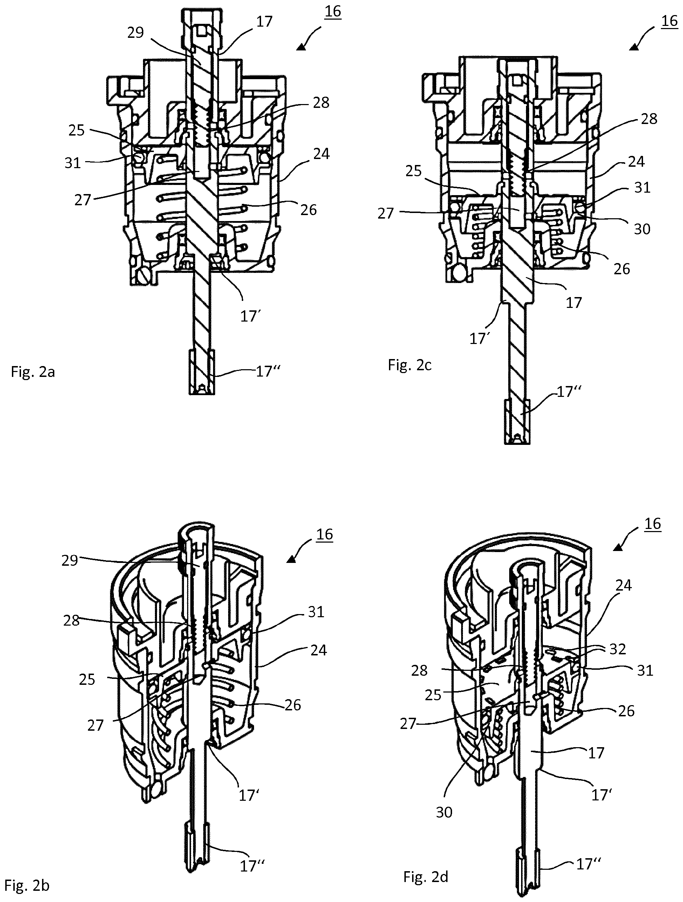

In den Figuren 2a bis 2b ist ein hydraulisch gedämpfter Schließantrieb 16 für die in Fig. 1 gezeigte Sanitärarmatur dargestellt. Dabei zeigen die Figuren 2a und 2b den Schließantrieb 16 in einer Ausgangsstellung, die der Schließstellung des von dem Schließantrieb 16 betätigten Ventils entspricht. Die Figuren 2c und 2d zeigen den Schließantrieb 16 in einer betätigten Stellung, das heißt nach Herunterdrücken des zugehörigen Bedienknopfes 14. Diese Stellung entspricht somit einer Öffnungsstellung des über den Schließantrieb betätigten Ventils.

Der Schließantrieb 16 besitzt ein Dämpfergehäuse 24, welches als Zylinder für einen darin in axialer Richtung beweglichen Kolben 25 dient. Das als Kolbenstange wirkende Stellelement 17 ist in axialer Richtung starr mit dem Kolben 25 verbunden, gegenüber diesem jedoch drehbar gelagert. Im unteren Teil des Dämpfergehäuses 24 ist unterhalb des Kolbens 25 eine Schraubendruckfeder 26 angeordnet, die auf den Kolben 25 eine nach oben gerichtete Rückstellkraft ausübt. Anstelle einer Schraubendruckfeder können natürlich auch andere Arten von Kraftspeichern als Rückstellelement eingesetzt werden, wie beispielsweise Gasdruckfedern, Tellerfedern, Ringfedern, Elastomerfedern o.ä..

Wird das Stellelement 17 und mit diesem der Kolben 25 nach unten gedrückt, so verdrängt der Kolben 25 im Dämpfergehäuse 24 befindliche Hydraulikflüssigkeit. Über eine Schulter 17'greift die Kolbenstange beim Herunterdrücken an die bewegliche Ventilscheibe 23 und bewegt diese in die untere Öffnungsstellung, so dass das Ventil einen Wasserfluss zum Auslauf 15 der Sanitärarmatur freigibt. Die Rückstellfeder 26 sorgt anschließend dafür, dass der Kolben 25 zurück in seine obere Endlage innerhalb des Dämpfergehäuses 24 bewegt wird. Hierbei muss die oberhalb des Kolbens 25 befindliche Hydraulikflüssigkeit verdrängt werden und durch eine Engstelle zurück in den unteren Bereich des Dämpfergehäuses 24 fließen. Die Engstelle wird im Ausführungsbeispiel durch eine axiale Bohrung 27 im Inneren der Kolbenstange 17 gebildet. In der Bohrung 27 ist ein Gewinde 28 ausgebildet, in welches eine Stellschraube 29 eingesetzt ist. Mit Hilfe der Stellschraube 29 kann der Querschnitt der Engstelle und damit die Öffnungszeit des Ventils variiert werden.

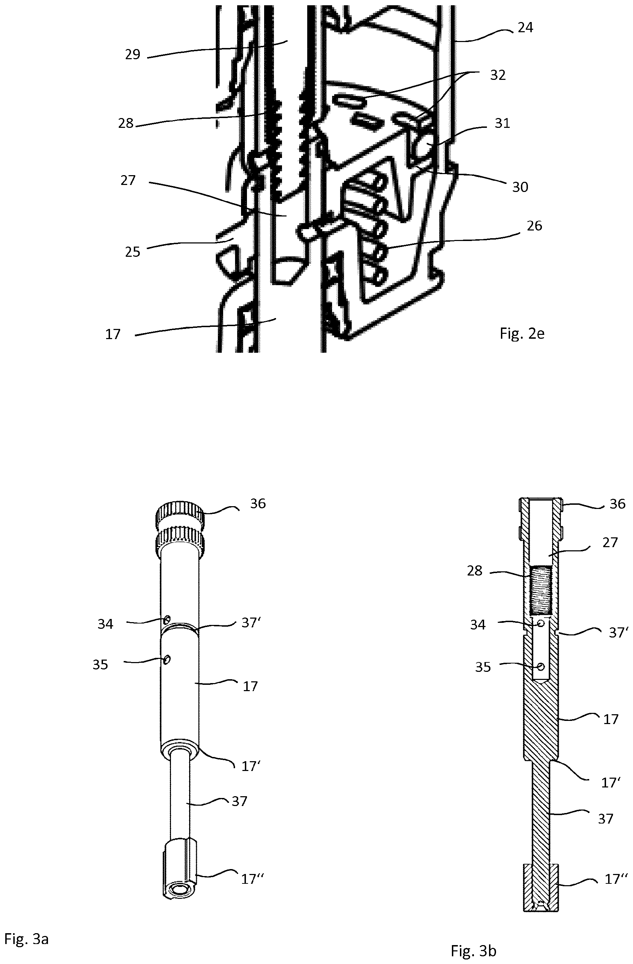

Um zu vermeiden, dass die Kolbenstange 17 zur Betätigung des Ventils gegen die Kraft des Dämpfers 16 heruntergedrückt werden muss, ist der Kolben 25 mit einer Kolbendichtung (Kolbenring) 31 ausgestattet, die in der Art eines Einwegventils arbeitet. Die Kolbendichtung 31 ist hierzu schwimmend in eine in Umfangsrichtung verlaufende Nut in der Seitenfläche des Kolbens 25 eingesetzt. Die untere Begrenzungsfläche dieser Nut bildet eine Dichtfläche, gegen die die Kolbendichtung 31 bei einer Bewegung des Kolbens in Schließrichtung dichtend anliegt. Bei einer Bewegung des Kolbens 25 in Öffnungsrichtung des Ventils liegt die Kolbendichtung 31 dagegen an der oberen Begrenzungsfläche der Nut 30 an, so dass Hydraulikflüssigkeit unterhalb der Kolbendichtung durch die Nut 30 über entsprechende Durchbrüche 32 an der Oberseite der Nut an der Kolbendichtung 31 vorbeiströmen kann. Fig. 2e zeigt dies in einer vergrößerten Detailzeichnung an einem Ausschnitt aus Fig. 2d. Alternativ zu der Ausgestaltung mit schwimmender Kolbendichtung kann in den Boden des Kolbens 25 auch ein Rückschlagventil eingesetzt sein.

In einem oberen Bereich 33 nahe der Endlage des Kolbens 25 ist der Durchmesser des Dämpfergehäuses 24 geringfügig erweitert. Hierdurch wird erreicht, dass in diesem Bereich der Kolben 25 mit wesentlich niedrigerem Widerstand nach oben bewegt werden kann, da die Hydraulikflüssigkeit um die Kolbendichtung 31 herumfließen kann. Der Punkt, an dem der Kolben 25 bei einer Aufwärtsbewegung den Bereich 33 mit erweitertem Durchmesser erreicht entspricht dabei im Wesentlichen dem Punkt, an dem ein im unteren Bereich der Kolbenstand 17 vorgesehenes Mitnehmerorgan 17" nach Ausführen eines Leerhubs an die bewegliche Ventilscheibe 23 angreift und diese bei seiner weiteren Aufwärtsbewegung zurück in die Schließstellung führt. Somit wird nach der Ausführung des Leerhubs, welcher die Öffnungszeit des mit dem Schließantrieb 16 betriebenen Ventils definiert wird, ein schneller Schließvorgang des Ventils durchgeführt, so dass ein längeres Nachlaufen von Wasser vermieden wird.

Anstelle eines Abschnitts mit erweitertem Durchmesser kann in diesem Bereich des Hydraulikzylinders in dessen Innenwand auch einfach eine Nut bzw. Ausnehmung vorgesehen werden, über die die Kolbendichtung umströmt werden kann. Ebenso wäre es möglich, überentsprechende seitliche Abgänge im Hydraulikzylinder eine externe Bypassleitung vorzusehen, über die Hydraulikflüssigkeit von dem oberen zurück in die unteren Bereich des Hydraulikzylinders strömen kann, um den durch die Engstelle gebildeten Widerstand des Dämpfers während der Schließhubs des Ventils zu vermindern.

In den Figuren 3a und 3b ist das Stellelement 17 vergrößert gezeigt. Innerhalb des Stellelements 17 ist eine axiale Bohrung 27 angebracht, welche im unteren Bereich leicht konisch verläuft. Im mittleren Bereich der Axialbohrung 27 ist außerdem ein Gewinde 28 eingeschnitten, in welches die Stellschraube 29 eingesetzt werden kann. Über zwei radial verlaufende Bohrungen 34, 35 kann Hydraulikflüssigkeit durch die axiale Bohrung 27 vom oberen zurück in den unteren Bereich des Dämpfergehäuses 24 fließen. Mittels der Stellschraube 29 lässt sich die so gebildete Engstelle im Querschnitt variieren. Eine in Umfangsrichtung verlaufende Nut 35 dient zur axial starren Befestigung des Stellelements 17 mit dem Kolben 25.

Der Kopfbereich 36 des Stellelements weist eine Verzahnung auf, auf die der Bedienknopf 14 der Sanitärarmatur aufgesteckt und mit einer Sicherungsschraube fixiert werden kann. Der untere Bereich 37 mit verringertem Durchmesser verläuft im zusammengebrauten Zustand durch die bewegliche Ventilscheibe 23, welche hierzu eine U-förmig nach einer Seite hin offene axiale Ausnehmung aufweist. Der mit Mitnehmern versehene Endbereich 17" dient einerseits als unterer Anschlag für die bewegliche Ventilscheibe 23, anderseits als Steckverbindung für eine im unteren Bereich 18 der Sanitärarmatur einsetzbarer Mischerbaugruppe.

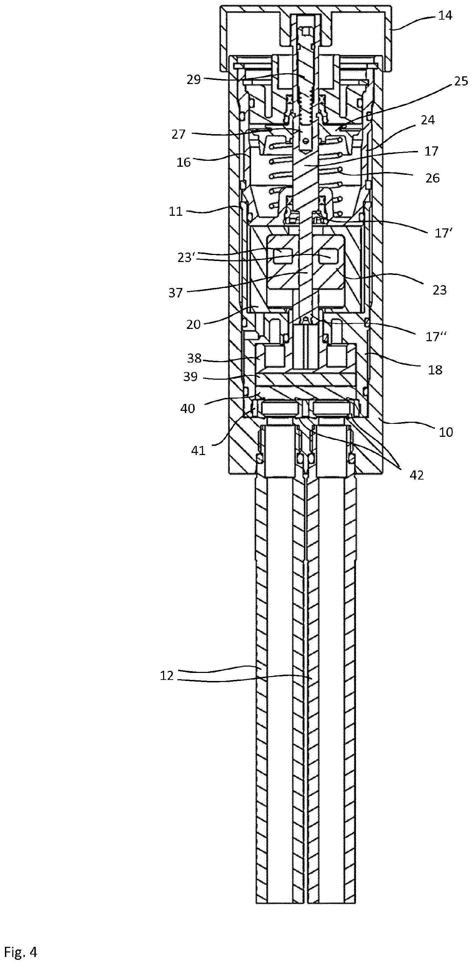

In Fig. 4 ist ein Längsschnitt durch eine Selbstschlussarmatur gezeigt, wobei die Schnittführung senkrecht zu der Schnittführung in Fig. 1 verläuft. Außerdem ist in diesem zweiten Ausführungsbeispiel in dem unteren Bauraum 18 der Ventilkartusche 11 eine Mischerbaugruppe eingesetzt. Diese umfasst ein Mischeroberteil 38, welches drehfest aber axial verschieblich mit der Kolbenstange 17 verbunden ist, ein Mischerunterteil 41, welches statisch mit dem Gehäuse der Ventilkartusche 10 verbunden ist, sowie zwei keramische Mischerscheiben 39, 40, welche dazu dienen in an sich bekannter Weise über separate Zuleitungen 12 zugeführtes Warm- und Kaltwasser in einstellbarem Mischungsverhältnis miteinander zu Mischwasser zu verschneiden. Das so gemischte Mischwasser gelangt bei geöffneter Ventileinheit 20 zum Auslauf 15 der Sanitärarmatur. Das Mischeroberteil 38 dient hierbei als Mitnehmer für die obere, drehbar gelagerte Mischerscheibe 39 und wird drehfest aber axial verschieblich mit dem profilierten unteren Ende 17" der Kolbenstange 17 verbunden. Die untere, statische Mischerscheibe 40 wird zusammen mit dem Mischerunterteil 41 starr in das Gehäuse der Ventilkartusche 10 eingesetzt. Das Mischerunterteil 41 dient als dichtender Gehäuseabschluß mit Zulauföffnungen für Warm- und Kaltwasser, an die über entsprechende Dichtungen 42 die Zuleitungen 12 münden.

Über den Betätigungsknopf 14 kann die Kolbenstange 17 nach unten gedrückt werden. Hierbei wird der Kolben 25 des Dämpfers 16 in seine untere Endlage geführt. Die Rückstellfeder 26 wird hierbei komprimiert. Die unterhalb des Kolbens 25 befindliche Hydraulikflüssigkeit wird beim Herunterdrücken des Kolbens verdrängt und fließt in der vorstehend beschriebenen Weise an der Kolbendichtung 31 des Kolbens 25 vorbei in den oberen Bereich des Dämpfergehäuses 24. Nach einem Leerhub von einigen mm stößt die Schulter 17' der Kolbenstange 17 an die bewegliche Ventilscheibe 23 und führt diese bei ihrer weiteren Abwärtsbewegung in die untere Öffnungsstellung des Ventils. Die beiden seitlich der axial verlaufenden Kolbenstange 17 angeordneten Durchlassöffnungen 23' in der beweglichen Ventilscheibe 23 kommen hierbei in Deckung mit entsprechenden Durchlassöffnungen in den vor und hinter der beweglichen Ventilscheibe 23 angeordneten statischen Ventilscheiben und geben so einen Wasserfluss durch das Ventil frei.

Wird der Bedienknopf 14 nach dem Herunterdrücken losgelassen, so beginnt die Rückstellfeder 26 den Kolben 25 zurück in seine Ausgangslage zu schieben. Hierbei muss die oberhalb des Kolbens 25 befindliche Hydraulikflüssigkeit durch die von der axialen Bohrung 27 mit zugehöriger Einstellschraube 29 in der Kolbenstange 17 gebildete Engstelle fließen. Hierdurch wird die Aufwärtsbewegung des Kolbens 25 gedämpft und somit verlangsamt.

Zunächst führt die Kolbenstange 17 hierbei wieder einen Leerhub aus, bis die Mitnehmer 17" am unteren Ende der Kolbenstange 17 die untere Kante der beweglichen Ventilscheibe 23 erreichen. Zu diesem Zeitpunkt erreicht der Kolben 25 den Bereich 33 des Dämpfergehäuses 24, in welchem sich der Zylinderdurchmesser erweitert. Der Kolben 25, dessen Kolbendichtung ab diesem Punkt von der Hydraulikflüssigkeit umströmt werden kann, führt somit eine schnelle Aufwärtsbewegung aus, bei der er die bewegliche Ventilscheibe 23 mit in die Schließstellung nimmt. Der Wasserfluss wird somit nach dem Ende des Leerhubes rasch und ohne langes Nachlaufen abgestellt.

Über das als Kolbenstange ausgeführte Stellelement 17 werden somit gleichzeitig das als Schieberventil ausgeführte Schließventil 20 und die Mischerbaugruppe mit den keramischen Mischerscheiben 39, 40 koaxial betätigt, indem eine axiale Linearbewegung des Stellelements 17 über die Schulter 17' bzw. die Mitnehmer 17" auf die bewegliche Ventilscheibe 23 übertragen wird, während gleichzeitig die Mitnehmer 17" eine Drehbewegung des Bedienknopfes 14 über das Mischeroberteil 38 auf die drehbare Ventilscheibe 39 übertragen.

Die im Ausführungsbeispiel gezeigte Sanitärarmatur dient somit als Selbstschlussarmatur mit einstellbarer Mischwassertemperatur. Daneben kann der erfindungsgemäße Schließantrieb für Ventile aber auch in vielfältiger anderer Weise eingesetzt werden. Beispielsweise kann mit einem solchen Schließantrieb ein Schließventil für eine Dusche zeitabhängig gesteuert werden, ebenso wie ein Schließventil für ein Urinal.

Im Ausführungsbeispiel ist der Schließantrieb mit einem hydraulischen Dämpfer ausgestattet, ohne dass die Erfindung auf ein solches hydraulisches Wirkprinzip beschränkt wäre. Vielmehr kann als Dämpfer beispielsweise auch ein Reibungsdämpfer oder eine andere vorzugsweise in nur eine Richtung wirksame Reibungsbremse an sich bekannter Bauart eingesetzt werden, um die Rückstellbewegung zu verlangsamen.

## Patentansprüche

1. Schließantrieb (16) für ein Ventil (20), umfassend
- einen Dämpfer (24, 25) mit einem beweglichen Dämpferorgan (25), das von einer Ausgangslage in eine Endlage auslenkbar ist,
- ein mit dem Dämpferorgan (25) verbundenes Stellelement (17) zum Öffnen und Schließen des Ventils (20) bei Auslenkung des Dämpferorgans (25) in seine Endlage bzw. Rückbewegung in seine Ausgangslage, und
- einem Kraftspeicher (26) der ausgebildet ist, eine Rückstellkraft auf das Dämpferorgan (25) in Richtung seiner Ausgangslage auszuüben; wobei der Schließantrieb (16) derart ausgebildet ist, dass das in die Endlage ausgelenkte Dämpferorgan (25) durch die von dem Kraftspeicher (26) ausgeübte Rückstellkraft gegen den Widerstand des Dämpfers (24, 25) selbsttätig zurück in eine Ausgangslage bewegt wird, wobei das Stellelement (17) bei seiner Rückbewegung zunächst einen Leerhub ausführt, bevor ein am Stellelement (17) vorgesehenes Mitnehmerorgan (17") eine Schließbewegung des Ventils (20) bewirkt, **dadurch gekennzeichnet, dass** der Dämpfer (24, 25) so ausgebildet ist, dass seine Dämpfungskraft im Anschluss an den Leerhub zumindest vermindert ist, derart, dass die Rückbewegung des Dämpferorgans während des Schließvorgangs des Schließantriebs gegenüber dem Leerhub beschleunigt erfolgt.

2. Schließantrieb nach Anspruch 1, bei dem der Dämpfer (24, 25) einen Hydraulikkolben (25) umfasst, der in einem mit einem Hydraulikmittel gefüllten Hydraulikzylinder (24) läuft und bei einer Rückbewegung zurück in die Ausgangslage Hydraulikmittel verdrängt, welches hierbei durch eine Engstelle (27, 34, 35) hindurchfließen muss

3. Schließantrieb nach Anspruch 2, bei dem der Hydraulikzylinder (24) in einem Bereich (33) vor der Ausgangslage einen erweiterten Durchmesser aufweist, so dass seine Dämpfungskraft in diesem Bereich vermindert ist.

4. Schließantrieb nach Anspruch 3, bei dem die Engstelle (27, 34, 35) durch das Stellelement (17) verläuft.

5. Schließantrieb nach Anspruch 3 oder 4, bei dem die Engstelle (27, 34, 35) durch eine axiale Bohrung (27) des Stellelements (17) gebildet wird, in die eine Stellschraube (29) eingesetzt ist, mittels der der Querschnitt der Engstelle (27, 34, 35) reguliert werden kann.

6. Schließantrieb nach dem einem der Ansprüche 2 bis 5, bei dem in dem Kolben (25) mindestens ein Einwegventil vorgesehen ist, durch welches Hydraulikflüssigkeit bei einer Bewegung des Kolbens in Öffnungsrichtung fließen kann oder bei dem mindestens eine Kolbendichtung (31) schwimmend gelagert ist, derart, dass sie bei einer Bewegung des Kolbens in Schließlichtung dichtend gegen eine Dichtfläche am Kolbenrand anliegt und bei einer Bewegung des Kolbens (25) in Öffnungsrichtung von Hydraulikflüssigkeit umströmt werden kann.

7. Schließantrieb nach einem der Ansprüche 2 bis 6, bei dem das Stellelement (17) als Kolbenstange ausgebildet, mit dem Kolben (25) axial starr verbunden ist.

8. Schließantrieb nach Anspruch 7, bei dem die Kolbenstange (17) drehbar mit dem Kolben (25) verbunden ist.

9. Schließantrieb nach einem der vorangehenden Ansprüche, bei dem das Mitnehmerorgan (17") als profilierter Zapfen ausgebildet ist, welcher eine drehinvariante Steckverbindung mit einer weiteren Baugruppe (38) ermöglicht.

10. Schließantrieb nach einem der vorangehenden Ansprüche, bei dem der Leerhub durch eine Schleppverbindung realisiert wird.

11. Selbstschließende Sanitärarmatur umfassend ein Ventil (20) mit einem beweglichen Ventilelement (23) und einem Schließantrieb (16) nach einem der vorangehenden Ansprüche, wobei das Stellelement (17) an das bewegliche Ventilelement (23) angreift, um das Ventil (20) zu öffnen oder zu schließen.

## Claims

1. Closing drive (16) for a valve (20), comprising
- a damper (24, 25) having a movable damper member (25) which is movable from a starting position to an end position,
- an actuator (17), connected to the damper member (25), for opening and closing the valve (20) on movement of the damper member (25) into its end position or return movement into its starting position, and
- an energy storage means (26) which is designed to exert a restoring force on the damper member (25) in the direction of its starting position; wherein the closing drive (16) is configured in such a way that the damper member (25), when moved into the end position, is moved automatically back into a starting position, against the resistance of the damper (24, 25), by the restoring force exerted by the energy storage means (26), wherein the actuator (17), during its return movement, first performs an idle stroke before a driver member (17") provided on the actuator (17) effects a closing movement of the valve (20),
**characterised in that**
the damper (24, 25) is constructed in such a way that, following the idle stroke, its damping force is at least reduced in such a way that during the closing operation of the closing drive the return movement of the damper member is accelerated relative to the idle stroke.

2. Closing drive according to claim 1, wherein the damper (24, 25) comprises a hydraulic piston (25) which runs in a hydraulic cylinder (24) filled with a hydraulic medium and, during a return movement back into the starting position, displaces hydraulic medium which, on being displaced, has to flow through a constriction (27, 34, 35).

3. Closing drive according to claim 2, wherein, in a region (33) before the starting position, the hydraulic cylinder (24) has a larger diameter so that its damping force is reduced in that region.

4. Closing drive according to claim 3, wherein the constriction (27, 34, 35) runs through the actuator (17).

5. Closing drive according to claim 3 or 4, wherein the constriction (27, 34, 35) is formed by an axial bore (27) of the actuator (17), in which bore there is inserted an adjusting screw (29) by means of which the cross-section of the constriction (27, 34, 35) can be regulated.

6. Closing drive according to any one of claims 2 to 5, wherein there is provided in the piston (25) at least one one-way valve through which hydraulic fluid is able to flow during movement of the piston in the opening direction or wherein at least one piston seal (31) is floatingly mounted in such a way that, during movement of the piston in the closing direction, it comes to rest sealingly against a sealing surface on the piston rim and around which hydraulic fluid is able to flow during movement of the piston (25) in the opening direction.

7. Closing drive according to any one of claims 2 to 6, wherein the actuator (17) is in the form of a piston rod which is axially rigidly connected to the piston (25).

8. Closing drive according to claim 7, wherein the piston rod (17) is rotatably connected to the piston (25).

9. Closing drive according to any one of the preceding claims, wherein the driver member (17") is in the form of a profiled pin which provides a rotationally invariant plug-in connection to a further assembly (38).

10. Closing drive according to any one of the preceding claims, wherein the idle stroke is realised by a drag connection.

11. Self-closing sanitary fitting comprising a valve (20) having a movable valve element (23) and a closing drive (16) according to any one of the preceding claims, wherein the actuator (17) acts on the movable valve element (23) in order to open or close the valve (20).

## Revendications

1. Servomoteur de fermeture (16) pour une soupape (20), comprenant
- un amortisseur (24, 25) avec un organe amortisseur mobile (25) qui peut être dévié d'une position initiale dans une position finale,
- un élément de commande (17) relié à l'organe amortisseur (25) pour ouvrir et fermer la soupape (20) lors de la déviation de l'organe amortisseur (25) dans sa position finale ou de son mouvement de retour dans sa position initiale, et
- un accumulateur de force (26), qui est conçu pour exercer une force de rappel sur l'organe amortisseur (25) en direction de sa position initiale ; sachant que le servomoteur de fermeture (16) est conçu de telle sorte que l'organe amortisseur (25) dévié dans sa position finale est, par la force de rappel exercée par l'accumulateur de force (26) et à l'encontre de la résistance de l'amortisseur (24, 25), déplacé automatiquement en retour dans une position initiale, sachant que l'élément de commande (17) accomplit lors de son mouvement de retour d'abord une course à vide, avant qu'un organe entraîneur (17") prévu sur l'élément de commande (17) ne produise un mouvement de fermeture de la soupape (20),
dans lequel l'amortisseur (24, 25) est conçu de telle sorte que sa force d'amortissement est au moins réduite à la suite de la course à vide, de telle sorte que le mouvement de retour de l'organe amortisseur s'effectue, pendant le processus de fermeture du servomoteur de fermeture, de manière accélérée par rapport à la course à vide.

2. Servomoteur de fermeture selon la revendication 1, dans lequel l'amortisseur (24, 25) comprend un piston hydraulique (25) qui se déplace dans un cylindre hydraulique (24) rempli d'un fluide hydraulique et qui, lors d'un mouvement de retour dans la position initiale, refoule le fluide hydraulique qui doit ce faisant s'écouler à travers un étranglement (27, 34, 35).

3. Servomoteur de fermeture selon la revendication 2, dans lequel le cylindre hydraulique (24) présente un diamètre élargi dans une région (33) située avant la position initiale, de sorte que sa force d'amortissement est réduite dans cette région.

4. Servomoteur de fermeture selon la revendication 3, dans lequel l'étranglement (27, 34, 35) s'étend à travers l'élément de commande (17).

5. Servomoteur de fermeture selon la revendication 3 ou 4, dans lequel l'étranglement (27, 34, 35) est formé par un perçage axial (27) de l'élément de commande (17) dans lequel est installée une vis de commande (29) au moyen de laquelle la section transversale de l'étranglement (27, 34, 35) peut être régulée.

6. Servomoteur de fermeture selon l'une des revendications 2 à 5, dans lequel au moins un clapet anti-retour est prévu dans le piston (25), par lequel du liquide hydraulique peut s'écouler lors d'un mouvement du piston dans le sens d'ouverture, ou dans lequel au moins un joint d'étanchéité de piston (31) est monté en montage flottant, de telle sorte que, lors d'un mouvement du piston dans le sens de fermeture, il s'applique en étanchéité contre une surface d'étanchéité sur le bord du piston et, lors d'un mouvement du piston (25) dans le sens d'ouverture, il peut être contourné par le liquide hydraulique.

7. Servomoteur de fermeture selon l'une des revendications 2 à 6, dans lequel l'élément de commande (17) est réalisé sous la forme d'une tige de piston à laquelle le piston (25) est relié en fixité axiale.

8. Servomoteur de fermeture selon la revendication 7, dans lequel la tige de piston (17) est reliée au piston (25) avec possibilité de rotation.

9. Servomoteur de fermeture selon l'une des revendications précédentes, dans lequel l'organe entraîneur (17") est réalisé sous la forme d'un tenon profilé qui permet une liaison par emboîtement invariante en rotation avec un autre ensemble (38).

10. Servomoteur de fermeture selon l'une des revendications précédentes, dans lequel la course à vide est réalisée par une liaison d'entraînement.

11. Appareil de robinetterie sanitaire à fermeture automatique comprenant une soupape (20) avec un obturateur mobile (23) et un servomoteur de fermeture (16) selon l'une des revendications précédentes, sachant que l'élément de commande (17) agit sur l'obturateur mobile (23) afin d'ouvrir ou de fermer la soupape (20).
